# EUROPÄISCHE PATENTSCHRIFT

(11) **EP 1 287 487 B1**
(45) Veröffentlichungstag und Bekanntmachung des Hinweises auf die Patenterteilung: **29.12.2004**
(21) Anmeldenummer: 01944901.6
(22) Anmeldetag: 07.05.2001
(51) Int. Cl.: G06K 19/02, G06K 19/04, G06K 19/067

(54) **CHIPKARTE**
CHIP CARD
CARTE A PUCE

(30) Priorität: 16.05.2000 DE 10024052
(43) Veröffentlichungstag der Anmeldung: 05.03.2003
(73) Patentinhaber: Orga Kartensysteme GmbH, 33104 Paderborn (DE)
(72) Erfinder: KÖNIG, Karl-Heinz, 24220 Flintbek (DE)
(74) Vertreter: Richardt, Markus, Dipl.-Ing.
(86) Internationale Anmeldenummer: PCT/DE2001/001706
(87) Internationale Veröffentlichungsnummer: WO 2001/088844

(56) Entgegenhaltungen:
- EP-A- 0 212 020
- WO-A-01/08089
- DE-A- 4 205 827
- DE-A- 19 645 083
- DE-A- 19 742 126
- DE-A- 19 752 695
- DE-A- 19 935 528
- GB-A- 2 321 725
- US-A- 4 701 601
- US-A- 5 399 823
- US-A- 5 969 951

## Beschreibung

Die Erfindung betrifft eine Chipkarte nach dem Oberbegriff des Patentanspruches 1.

Chipkarten, die allgemein auch als Datenkarten oder häufig als SmardCards bezeichnet werden, sind in den unterschiedlichsten Anwendungsbereichen im Einsatz. Es sind passive Chipkarten, das heisst Chipkarten mit einem Lesespeicher (ROM, EPROM oder ähnliche Speicher) und auch aktive Chipkarten in Form einer Prozessorkarte, die beispielsweise kartenintem Daten verarbeiten kann, bekannt.

Chipkarten werden als Telefonkarten ebenso wie als Kredit- oder Bankkarten genutzt oder finden zur Zugangskennung in Unternehmen oder anderen abgesicherten Bereichen Anwendung. Für die Herstellung sowie zur Einhaltung einheitlicher Größen des Chipkartenkörpers sowie der Einbringung von internen Verschaltungen gibt es anerkannte Chipkartenstandards.

Es ist bekannt, derartige Chipkarten beispielsweise mit optischen und/oder elektrischen Schaltelementen, mit Displays, Batterien und anderen elektronischen Schaltelementen zu versehen. Eine mögliche Verschaltung oder die Speicherung von Daten kann ein Chipmodul übernehmen. Darüber hinaus sind laminierbare Trägerfolien mit einer internen Verschaltung bekannt, die auf den Chipkartenkörper aufgebracht beziehungsweise in diesen eingebettet werden können.

Die Herstellung dieser bekannten Chipkarten ist allerdings recht aufwendig, weil die einzelnen Bestandteile separat hergestellt werden müssen, wobei eine spätere mechanische und/oder elektrische Verbindungmit der Integration der Schaltelemente in den Chipkartenkörper erforderlich ist, wodurch sich ferner zusätzliche Schwachstellen im Gesamtaufbau der Chipkarte ergeben können. Darüber hinaus besteht häufig das Problem, dass geometrische Abmessungen sehr genau eingehalten werden müssen oder unterschiedliche elastomechanische Eigenschaften insbesondere der Schaltelemente zu berücksichtigen sind. Zur Verschalung der Schaltelemente mit den internen Verschaltungen der laminierbaren Trägerfolie können Verbindungstechniken aus dem Bereich Schweißen, Kleben oder Löten gewählt werden, was zu zusätzlichen fertigungstechnischen Aufwendungen führt.

Aus der DE 19645083A1 ist eine kontaktlose Chipkarte mit Transponderspule bekannt. Die Anschlussflächen des Chipmoduls, die in Kontakt zu den Spulen-Anschlusskontakten treten sollen, haben einen weiten Abstand, sodass die Bahnen der Spule dazwischen durchgeführt werden können und die Enden der Spule relativ großflächig ausgeführt werden können. Die Anschlussflächen der Spule werden mittels eines Schaltelements kontaktiert. Dieses Schaltelement besteht beispielsweise aus so genannten druckempfindlichleitenden Gummimatten. Derartige Gummimatten werden üblicherweise mit Nickelkügelchen oder Sifberkügelchen in Form einer Matrix hergestellt und werden erst bei Druck leitend. Die Ansprüche wurden gegen dieses Dokument abgegrenzt.

Aus der GB 2321725A ist eine so genannte Smart-Card mit integriertem IC-Chip und Hochfrequenzempfangsschaltkreis bekannt. Allerdings hat diese Smart-Card keinen mechanisch von einem Benutzer zu betätigenden Schalter. Dasselbe gilt für die DE 19752695A1, die ein elektronisches Schaltelement zur Sperrung von elektronischen Teilen in einer Chipkarte zeigt.

Die EP 0212020 zeigt ein Datenverarbeitungskartensystem und ein Verfahren zu dessen Herstellung. Eine solche Karte hat eine Sandwich-Struktur mit einer auflaminierten flexiblen Schicht.

Aus der WO 01/08089A1 ist ein Transpondersystem mit einer Transpondervorrichtung, einer Leseeinrichtung zur Kommunikation mit der Transpondervorrichtung und einer Funktionseinrichtung zur Ausführung von durch die Leseeinrichtung vorgegebenen Funktionen, wobei die Transpondervorrichtung eine aktiv betätigbare Schaltkontakteinrichtung zur fakultativen Übermittlung einer zusätzlichen Information an die Leseeinrichtung und zur Auslösung einer hierdurch definierten Funktion der Funktionseinrichtung aufweist, bekannt.

Eine Laminatiage dient zur Aufnahme eines federelastischen Bewegungskontakts und das Substrat zur Aufnahme des Gegenkontakts der Schaltkontakteinrichtung, derart, dass äußerer Druck auf den Bewegungskontakt eine Schließung des Kontakts bewirkt. Wenn der Bewegungskontakt aus einem formelastischen Kontaktdom gebildet ist, der in der Grenzschicht zwischen der Laminatlage und dem Substrat angeordnet ist, kann die Schaltkontakteinrichtung durch einfaches Einfügen derartiger Kontaktdome in den Laminataufbau während der Herstellung der Laminatstruktur erfolgen.

Aus der DE 19935528A1 ist ein Tastschalter für Chipkarten bekannt. Der Tastschalter umfasst einen Kontaktbereich und eine flexible Schaltmembran mit elektrisch leitender Kontaktfläche, wobei die Kontaktfläche in unbelastetem Zustand der Schaltmembran zu dem Kontaktbereich einen Abstand aufweist. Darüber hinaus ist ein Schutzwall vorgesehen, der den Kontaktbereich umgibt, wobei die Höhe des Schutzwalls so gewählt ist, dass eine Flächenbelastung des Tastschalters bzw. der flexiblen Schaltmembran nicht zu einer Kontaktierung zwischen der Kontaktfläche der Schaltmembran und dem Kontaktbereich führt. Ein ähnlicher Tastschalter ist auch aus der US-A-5,969,951 bekannt. Gemeinsamer Nachteil dieser vorbenannten Tastschalter ist, dass diese keine taktile Rückmeldung geben, sodass ein Benutzer nicht sicher sein kann, ob ein Schaltvorgang tatsächlich ausgelöst worden ist.

Aus der US-A-5,399,823 ist ein domförmiger Membranschalter mit taktiler Rückmeldung bekannt. Ein Nachteil dieses Membranschalters ist, dass dieser relativ komplex aufgebaut ist und eine relativ große Bauhöhe hat, die ihn für das übliche Chipkartenformat ungeeignet macht.

Es ist technische Problemstellung der Erfindung, eine Chipkarte der gattungsgemäßen Art so weiterzuentwickeln, dass sie insgesamt einfach und kostengünstig herstellbar ist und dabei eine Vielzahl unterschiedlicher Einsatzmöglichkeiten bietet.

Gelöst wird diese technische Problemstellung mit dem Gegenstand des Patentanspruchs 1.

Die erfindungsgemäße Chipkarte weist wenigstens eine laminierbare Trägerfolie auf, die zusätzlich zu ihrer internen Verschaltung eine elektrische Unterschaltung des elektronischen Schaltelements enthält. Die Trägerfolie kann somit in einem Arbeitsgang hergestellt werden und integriert dabei gleichzeitig mehrere Funktionen, sodass eine Chipkarte nach der Erfindung für unterschiedliche Anwendungsfälle flexibel einsetzbar, also beispielsweise auch für verschiedene Kartenlesegeräte verwendbar ist.

Erfindungsgemäße Chipkarten weisen bezüglich ihrer Herstellbarkeit gegenüber bekannten Ausführungen entscheidende Vorteile auf. Die Notwendigkeit, in aufeinander folgenden Prozessschritten mehrere unterschiedliche Verschaltungen vorzunehmen, bzw. Schaltelemente auf die Chipkarte aufzubringen oder in diese einzusetzen und danach elektrisch zu verschalten, kann entfallen, womit sich der Aufbau, der verbindungstechnische Aufwand und die Verschaltbarkeit vereinfachen.

Besondere Ausgestaltung der Erfindung sind Gegenstand der Unteransprüche.

Um auf die Trägerfolie eine elektrische Schaltung aufzubringen bzw. eine interne Verschattung der Trägerfolie vorzusehen und diese mit den Schaltelementen in einem Arbeitsgang zu verschalten, ist der Einsatz einer Leitpaste sinnvoll, die in Verbindung mit einem Druckverfahren (Siebdruck) angewendet werden kann, sodass die genannten Arbeitsgänge vereinfacht werden. Es sind aber auch geätzte, physikalisch oder chemisch abgeschiedene Metallisierungen möglich.

Gemäß der Erfindung sollte das Schaltelement einen mechanischen und elektrischen Überbau aufweisen. Dieser ermöglicht es beispielsweise, dem Chipkartennutzer eine sehr einfache taktile Rückmeldung darüber zu geben, ob ein Schaltvorgang vollzogen wurde oder nicht.

Dementsprechend ist der Überbau in Form einer mechanischen Schnappscheibe ausgeführt. Die Schnappscheibe bietet durch ihre Eigenelastizität eine sehr einfache und leicht realisierbare taktile Rückmeldung.

Zur Verbesserung der Eigenelastizität ist es daher auch angebracht, den Dom beziehungsweise die Schnappscheibe aus Kunststoff mit einer Metall- oder Karbonbeschichtung derselben herzustellen.

Ferner wird angeregt, den Überbau mit der Chipkartenoberfläche oder geringfügig unterhalb dieser Oberfläche abschließen zu lassen. Eine derartige Ausführung vermeidet erhabene Oberflächenstrukturen der Chipkarte, sodass ihre Handhabbarkeit insbesondere beim Einsatz in Kartenlesegeräten verbessert wird. Bekanntermaßen weisen einige der Kartenlesegeräte sehr schmale Spalte auf, durch die die Chipkarte hindurchbewegt werden muss.

Das wenigstens eine Schaltelement kann entsprechend einer Weiterbildung der Erfindung eine ein- oder mehrelementige Folientastatur, Silikonschaltmatte beziehungsweise ein kapazitives oder optisches Einzelschaltelement sein, wobei unter einem Schaltelement selbstverständlich auch eine zusammengesetzte beziehungsweise in sich vernetzte Struktur aus mehreren Einzelelementen verstanden werden kann.

Ein Ausführungsbeispiel der Erfindung wird nachstehend unter Bezugnahme auf die Zeichnungen näher erläutert. Es zeigen:
Figur 1: eine Ansicht einer erfindungsgemäßen Chipkartenoberfiäche,
Figur 2: einen Querschnitt durch eine Chipkarte in Längsrichtung,
Figur 3: ein Schaltelement in Form eines im Querschnitt U-förmigen Domes,
Figur 4: ein Schaltelement in Form einer Schnappscheibe im Querschnitt.

In den Figuren ist beispielhaft eine erfindungsgemässe Chipkarte dargestellt. Diese besteht aus einem Chipkartenkörper 2, auf dem eine laminierte Trägerfolie 4 aufgebracht ist, die ihrerseits eine interne Verschaltung 5 aufweist. Die interne Verschaltung besteht aus Leiterbahnen 13 und Anschlussflächen 11 zur Verbindung und zum Anschluss elektronischer Bauelemente wie z. B. eines Chipmoduls. Dieses dient in an sich bekannter Weise beispielsweise zur Speicherung von Daten. Darüberhinaus besitzt die Trägerfolie 4 eine Unterschaltung 3 als Bestandteil eines Schaltelementes 6. Die Unterschaltung ist über Leiterbahnen 14 mit den anderen Baulelementen der Chipkarte verbunden und wird wie die übrige interne Verschaltung 5 beispielsweise im Siebdruckverfahren oder im Rahmen eines Ätzvorganges auf der Trägerfolie 4 aufgebracht.

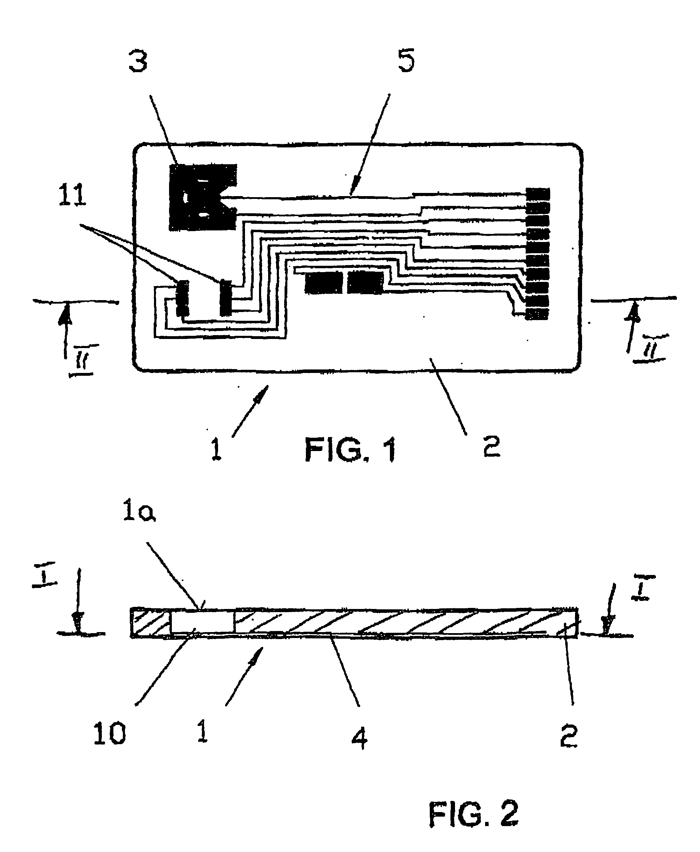

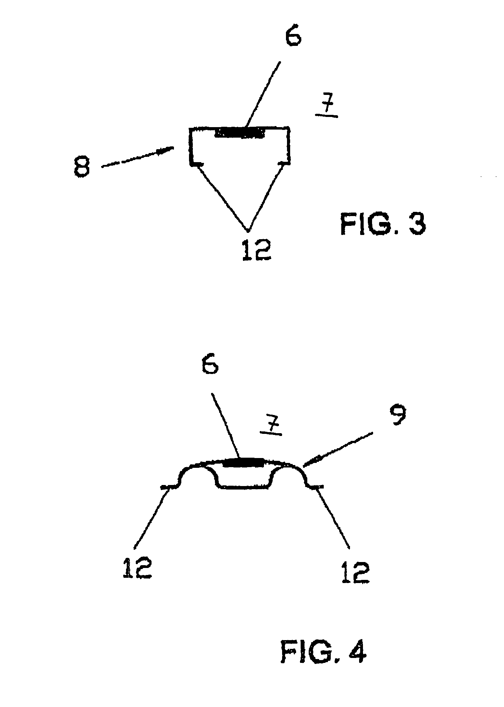

Die Figur 2 zeigt eine in den Chipkartenkörper 2 eingelassene Kavität 10, in die ein elektronisches Schaltelement 6 eingesetzt werden kann, wie es anschaulich aus den Figuren 3 und 4 hervorgeht. Dieses elektronische Schaltelement 6 ist Bestandteil eines Überbaus 7, der entsprechend der Figur 3 als im Querschnitt U-förmiger Dom 8 oder entsprechend der Darstellung in Figur 4 als Schnappscheibe 9 ausführbar ist.

Der Überbau weist zur Kontaktierung mit der elektronischen Unterschaltung 3 der Trägerfolie 4 Kontaktflächen 12 auf.

### Bezugszeichenliste:

- 1: Chipkarte
- 1a: Chipkartenoberfläche
- 2: Chipkartenkörper
- 3: Unterschaltung
- 4: Trägerfolie
- 5: Interne Verschaltung
- 6: Schaltelement
- 7: Überbau
- 8: Dom
- 9: Schnappscheibe
- 10: Kavität
- 11: Anschlussfläche
- 12: Kontaktflächen
- 13: Leiterbahn
- 14: Leiterbahn

## Patentansprüche

1. Chipkarte (1) mit
- einem Chipkartenkörper (2),
- einem elektronischen Bauelement,
- mindestens einer laminierten Trägerfolie (4) auf dem Chipkartenkörper (2), wobei die Trägerfolie (4) Anschlussflächen (11) zur Verbindung mit dem elektronischen Bauelement, eine interne Verschaltung und eine elektronische Unterschaltung (3) für ein elektronisches Schaltelement (6) aufweist,
- einem mechanischen und elektrischen Überbau (7) des elektronischen Schaltelements (6), wobei der Überbau so ausgebildet ist, dass er mit der Chipkartenoberfläche (1a) oder geringfügig unterhalb der Chipkartenoberfläche abschließt, wobei das elektronische Schaltelement (6) Bestandteil des Überbaus (7) ist und der Überbau (7) Kontaktflächen (12) zur Kontaktierung mit der elektronischen Unterschaltung (3) aufweist
**dadurch gekennzeichnet,**
**dass** der Überbau (7) zur Abgabe einer taktilen Rückmeldung, ob ein Schaltvorgang vollzogen wurde oder nicht, ausgebildet ist,
der Überbau (7) eine Schnappscheibe (9) aufweist, und
**dass** die Schnappscheibe (9) aus Kunststoff besteht und eine Metall- oder Karbonbeschichtung aufweist.

2. Chipkarte nach Anspruch 1, **gekennzeichnet durch** eine Kavität (10) in dem Chipkartenkörper (2) zur Aufnahme des elektronischen Schaltelements (6).

3. Chipkarte nach einem der vorhergehenden Ansprüche, **dadurch gekennzeichnet, dass** das wenigstens eine elektronische Schaltelement (6) eine ein- oder mehrelementige Folientastatur, eine Silikonschaltmatte oder ein kapazitives Einzelschaltelement ist.

## Claims

1. A chip card (1) comprising
- a chip card body (2),
- an electronic component,
- at least one laminated carrier foil (4) on the chip card body (2), the carrier foil (4) having: terminal areas (11) for connection to the electronic component; an internal connection; and an electronic sub-circuit (3) for an electronic switch element (6),
- a mechanical and electrical superstructure (7) of the electronic switch element (6), the superstructure being formed in such a way that it terminates at the chip card surface (la) or slightly below the chip card surface, in which case the electronic switch element (6) forms part of the superstructure (7) and the superstructure (7) has contact surfaces (12) for contacting the electronic sub-circuit (3),
**characterized in that**
the superstructure (7) is designed to give tactile feedback as to whether a switching process has taken place or not,
**in that** the superstructure (7) has a snap disc (9), and
**in that** the snap disc (9) is made of plastic and has a metal or carbon coating.

2. A chip card according to Claim 1, **characterized by** a cavity (10) in the chip card body (2) for receiving the electronic switch element (6).

3. A chip card according to one of the preceding claims, **characterized in that** the electronic switch element (6), of which there is at least one, is a single- or multielement membrane keypad, a silicone keypad or an individual capacitive switch element.

## Revendications

1. Carte à puce (1) comprenant
- un corps de carte à puce (2),
- un composant électronique,
- au moins une feuille de support (4) laminée sur le corps de carte à puce (2), la feuille de support (4) présentant des surfaces de connexion (11) pour la liaison avec le composant électronique, un câblage interne ainsi qu'un sous-circuit électronique (3) pour un élément de commutation électronique (6),
- une superstructure mécanique et électrique (7) de l'élément de commutation électronique (6), la superstructure étant configurée pour se terminer au niveau de la surface de carte à puce (1a) ou légèrement en dessous de la surface de carte à puce, l'élément de commutation électronique (6) faisant partie de la superstructure (7), et la superstructure (7) présentant des surfaces de contact (12) pour la mise en contact avec le sous-circuit électronique (3),
**caractérisée en ce que**
la superstructure (7) est configurée pour fournir un message de retour tactile indiquant si une opération de commutation a été effectuée ou non,
la superstructure (7) présente un disque à déclic (9), et
le disque à déclic (9) est réalisé en matière plastique ou présente un revêtement métallique ou carbonique.

2. Carte à puce selon la revendication 1,
**caractérisée par**
une cavité (10) dans le corps de carte à puce (2) pour recevoir l'élément de commutation électronique (6).

3. Carte à puce selon l'une quelconque des revendications précédentes,
**caractérisée en ce que**
l'au moins un élément de commutation électronique (6) est un clavier à effleurement en un ou plusieurs éléments, un tapis de commutation en silicone ou un élément distinct de commutation capacitif.
